# EUROPEAN PATENT SPECIFICATION

(11) **EP 4 258 862 B1**
(45) Date of publication and mention of the grant of the patent: **21.01.2026**
(21) Application number: 21834965.2
(22) Date of filing: 08.12.2021
(51) Int. Cl.: A01J 7/02

(54) **A SYSTEM FOR CLEANING MILKING EQUIPMENT**
SYSTEM ZUR REINIGUNG EINER MELKVORRICHTUNG
SYSTÈME DE NETTOYAGE D'ÉQUIPEMENT DE TRAITE

(30) Priority: 11.12.2020 SE 2051441
(43) Date of publication of application: 18.10.2023
(73) Proprietor: DeLaval Holding AB, 147 21 Tumba (SE)
(72) Inventor: STREMECKI, Tomasz, 147 21 Tumba (SE)
(74) Representative: DeLaval International AB
(86) International application number: PCT/SE2021/051221
(87) International publication number: WO 2022/124971

(56) References cited:
- EP-A1- 2 368 645
- DE-U1- 202020 105 834
- US-A- 6 089 242
- US-A1- 2011 082 595

## Description

### TECHNICAL FIELD

This document discloses a system configured to clean a piece of milking equipment in an agricultural environment and a detergent container comprising a detergent, which detergent container is associated with a configuration tag. The detergent is to be used by a cleaning unit of the system wherein at least one parameter of the cleaning unit is set based on a reference to the detergent obtained from the configuration tag.

### BACKGROUND

On a dairy farm, hygiene issues of every equipment maintaining, transporting or otherwise in contact with the extracted milk is very important, as the milk otherwise may become contaminated and inappropriate for human consumption. For this reason, cleaning of interior surfaces of various milking equipment such as milk transportation pipelines, milk tanks, milking stations, etc., must be made rather frequently.

A cleaning unit/ washing machine that mix detergent and water is often used for this purpose. The cleaning unit may heat and provide a mixture of detergent and water to clean the interior surfaces of pipelines and containers used for milk, for removing any organic contamination, milk and water plaque and other non-desired particles. The mixture of detergent and water may circulate through the milking equipment for a period of time, whereafter a rinsing with water may be made.

During the cleaning process, no milking could be made. As the cleaning process typically has to be repeated several times per 24 hours, time usage during the cleaning process will generate an aggregated down time of the milking equipment over time. For this reason, it is desired to not use more time than necessary for the cleaning.

The milking equipment may comprise milk pipelines which are several hundred meters long, which consume a considerable amount of detergent during cleaning. It is desired not to use more detergent than necessary, as it adds to eutrophication when the used detergent finally reaches nature. Excessive energy consumption may also have a negative impact on the environment (depending on energy source).

Heating of the water/ detergent mixture (or rinsing water) during the cleaning process consume a considerable amount of energy, which is costly. It is thus desired to not heat more water/ detergent mixture or rinsing water than necessary to fulfil cleaning requirements.

Different categories of detergents may be used for different purposes and at different time intervals. An alkaline detergent may be used for cleaning/ disinfection purpose at a daily basis, and an acid detergent may be used for dissolving scale formed within the pipeline at a sparser time interval. Sometimes also disinfection liquid may be added to the detergent. It is desired to select the appropriate detergent when required and adjust parameters of the cleaning unit depending on the selected detergent.

The detergent, besides being of different categories, may also be of different qualities. Some detergent of may require a higher concentration and/ or a higher washing temperature and/ or a longer circulation time than other detergent for example. All parameter settings are made manually and normally have to be adjusted or at least carefully checked when a new detergent is used. However, to adjust parameters of the cleaning unit to optimise the cleaning process is a quite complex task. There is an obvious hazard that cleaning parameters are selected which either result in a waste of resources, or in that the milking equipment remain contaminated after the cleaning, resulting in that the milk has to be discarded.

In case the farm runs out of detergent, cleaning of the milking equipment could not be performed, which means that milking could not be made until the detergent has been replaced and the cleaning completed.

Optimising the cleaning session for ascertaining appropriate sanitary level of the milking equipment while not wasting resources is a challenging and rather complex undertaking, which will vary much between different detergents, dimensions/ length of milk line and other equipment, price of energy and water, whether the farm is using robotic milking, stationary milking with a pit, a rotary milking parlour or tied up milking, etc. A minor human error when setting parameters of the cleaning unit may result either in wasted milk or wasted resources.

The personnel at a dairy farm are often busy with other duties involving supervision and maintenance of the animal welfare and comfort. It would thus be desired to automate as much as possible of the cleaning process, thereby relieving the personnel from the above-described complex burdens of calculating and setting appropriate parameters for the cleaning session of the milking equipment.

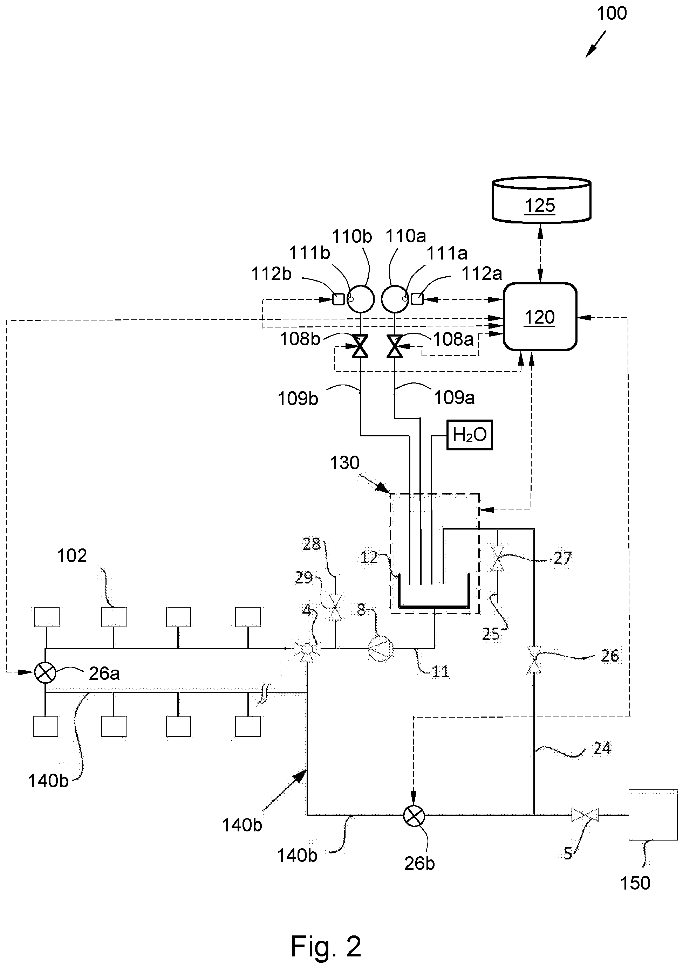

Document WO 2014193232 A1 concerns an animal treatment system for treating an animal. The system comprises a supply means for supplying treatment fluid of a connected containing treatment fluid to the animal, see abstract and claim 1. The container is marked with a bar code comprising identification information of the container, see figure 2. The system comprises an optical recording means such as a scanner, for recording identification information on the container. The system also comprises a processor for receiving the identification information recorded by the optical recording means. The processor is configured to, on basis of the recorded identification information received and predefined criteria, controlling the supply means for the purpose of discharging or not treatment fluid from the container.

A disadvantage with the solution provided in document WO 2014193232 A1 is that it only concerns a very simple binary situation, to either allow or disallow usage of the fluid of the container. When cleaning a milking system, there are many fluids of different categories such as alkaline and acidic cleaning agents, which per se are allowed to be used for cleaning. Fluids of different providers comprise different amounts and/ or types or combinations of chemicals. That does not necessarily mean that they cannot be used at all, but rather that one or several parameters such as cleaning time, applied temperature during cleaning, concentration of the fluid, has to be adjusted in order to achieve a satisfying result. These parameters are conventionally set completely manually by the farmer, which is time consuming and tedious; human mistakes are easily made.

It is desired to automatically set appropriate cleaning parameters of a certain fluid, for saving time of the farmer, for keeping the down-time of the milking system (due to the cleaning) as short as possible, yet assuring appropriate cleaning, avoiding human mistakes and saving energy/ water/ detergent by not applying excessive amounts of resources during cleaning.

Document US 6089242 A concerns a dairy pipeline wash system for monitoring and controlling the wash cycle of a diary harvesting facility including a user interactive data processor for receiving and storing wash parameters, monitoring wash conditions, comparing monitored wash conditions to wash parameters and controlling wash conditions to comply with wash parameters, see abstract.

The document US 6089242 A describes a conventional milking system at a farm and manual configuration of a cleaning system thereof, as made by the farmer, and could be regarded as illustrating the multiple problems and disadvantages of manual configuration of cleaning parameters.

Document US 2011082595 A1 describes automatic calibration of dispense parameters of a product dispense system accomplished via electronic communication of product information, see abstract. In particular, the document relates to chemical product dispense systems comprising chemical product containers, see paragraph 1. The chemical product container comprises an electrical readable label, which can carry information concerning the chemical product in the container.

Document DE 202020105834 U1 relates to cleaning of an apparatus for beverage, such as a coffee machine, see abstract and claim 1.

It would be desired to find a solution for assisting the farm personnel in configuring the cleaning unit.

### SUMMARY

It is therefore an object of this invention to solve at least some of the above problems and facilitate for personnel at a dairy farm to set parameters of a cleaning unit when performing a cleaning session of milking equipment.

According to a first aspect, this objective is achieved according to claim 1 by a system configured to clean a piece of milking equipment in an agricultural environment. The system comprises a detergent container comprising a detergent. The system also comprises a cleaning unit, configured to utilise detergent of the detergent container and water to create a mixture, and to clean the piece of milking equipment with the mixture, during a cleaning session. In addition, the system also comprises a dosing device, configured to supply the detergent from the detergent container to the cleaning unit. Furthermore, the system comprises a configuration tag, associated with the detergent container, wherein a memory device of the configuration tag comprises a reference to the detergent of the detergent container. The system in addition comprises a wireless communicator, configured to communicate wirelessly with the configuration tag and to retrieve the reference to the detergent from the memory device of the configuration tag, when the configuration tag is situated within a communication distance from the wireless communicator. The system furthermore also comprises a control unit. The control unit is configured to obtain the reference to the detergent via the wireless communicator from the memory device of the configuration tag. The control unit is also configured to set at least one parameter of the cleaning unit for the cleaning session, based on the obtained reference,
wherein the control unit is configured to only enable performance of a pre-programmed cleaning session program for the cleaning device, when the cleaning unit is activated while detergent is extracted via the dosing devices, from the detergent container to the cleaning device, and no configuration tag associated with the detergent container is detected by the wireless communicator.

Hereby, configuration of the cleaning unit is radically simplified, saving time, money and efforts of the farmer as the resource management is optimised for the selected detergent. Also, the risk of human errors when setting the parameters is omitted.

In a first implementation of the system according to the first aspect wherein the control unit is configured to obtain information relating to temperature during the cleaning session, detergent concentration, cleaning time of the cleaning session, or a combination thereof. The obtained information may in some embodiments also comprise a network location reference such as an IP (Internet Protocol) address, where additional information may be achieved.

The control unit may thereby obtain information for determining which parameter settings to put during the cleaning session, automatically, without requiring intervention or manual correction and input from a human operator, enabling him/ her to focus on other tasks at the farm. Hereby time and money are saved, while ascertaining appropriate sanitary level of the milking equipment.

In a second implementation of the system according to the first aspect, or according to the first implementation thereof, the control unit is configured to obtain information relating to amount of detergent in the detergent container and/ or expiration date of the detergent.

The control unit may thereby determine a moment in time when it is time to change detergent container, and/ or to buy a replacement detergent container. By ascertaining that valid detergent always is available, cleaning of the milking equipment is assured and the risk of running out of detergent at the farm is avoided.

In a third implementation of the system according to the first aspect, or according to any previously disclosed implementation thereof, the memory device of the configuration tag comprises the above-mentioned information associated with the reference. The control unit is configured to obtain the information via the wireless communicator from the memory device of the configuration tag.

By keeping the information in the memory device of the configuration tag, perhaps in particular the information concerning amount of detergent in the detergent container and/ or expiration date of the detergent, the farmer is enabled to move the detergent container to another cleaning unit at the farm, for example in an emergency situation when no other detergent is available due to a previous leakage, still allowing the control unit (of that cleaning unit) to keep track on the amount of detergent in the detergent container.

In a fourth implementation of the system according to the first aspect, or according to any previously disclosed implementation thereof, the system also comprises a database comprising the information associated with the reference to the detergent comprised in the detergent container. The control unit may be configured to obtain the reference to the detergent from the configuration tag via the wireless communicator; provide the obtained reference to the database; and retrieve the information associated with the reference from the database.

By using a database, local and/ or remote, for storage of at least some of the information associated with the detergent, only a low capacity memory device is required in the configuration tag, which reduces costs. Also, the local or remote database may comprise additional information concerning local conditions at the farm which are influencing optimisation of the parameter settings, for example length and/ or dimensions of the milking line, contact time during slug cleaning, contact time between mixture and the milking equipment in a cleaning session, etc. By creating a digital twin of the milking equipment at the farm in the database, simulation of the cleaning session at the farm may be made, either by the control unit or at a farm external service provider, thereby further optimising and/ or improving the parameter settings of the cleaning session at the farm.

In a fifth implementation of the system according to the first aspect, or according to any previously disclosed implementation thereof, the system also comprises a communication device configured to communicate with the database over a communication network. The control unit is configured to obtain information from the database via the communication device.

By enabling communication with a remote database for obtaining at least some of the information associated with the detergent, for example a database run by a producer of the detergent or a service provider, new updates concerning recommended cleaning temperature, time, concentration, rinsing, etc., for the detergent and other findings from recent research could be accessed and immediately implemented at the farm. Also, in some embodiments, local parameters of the farm and/ or parameter values of a sensor at the milking equipment of the farm may be provided to the remote service provider, who, based there upon may calculate optimal parameters to be applied by the cleaning unit for the subsequent cleaning session, as a subscription service. The cleaning session is thereby optimised, with local conditions taken into account and/ or outcome of a previous cleaning session as perceived by the sensor, also when there are only limited computational resources available at the farm.

In a sixth implementation of the system according to the first aspect, or according to any previously disclosed implementation thereof, the parameter of the cleaning unit to be set by the control unit for the cleaning session comprises: cleaning time of the cleaning session; temperature used by the cleaning unit during the cleaning session; concentration of the detergent; and/ or contact surface time between the mixture and interior surfaces of the milking equipment to be cleaned.

It is hereby clarified which parameter or parameters of the cleaning session to set by the control unit. When several of these parameters are set, it is sometimes also referred to as a program setting.

In a seventh implementation of the system according to the first aspect, or according to any previously disclosed implementation thereof, the obtained information comprises amount of detergent in the detergent container. Also, the control unit is configured to estimate amount of detergent used by the cleaning unit during the cleaning session. The control unit is configured to calculate a remaining amount of detergent in the detergent container after the cleaning session, by subtracting the estimated used amount of detergent from the obtained amount of detergent; and transmit information related to the remaining amount of detergent via the wireless communicator to the configuration tag, for updating the information comprising the amount of detergent in the detergent container stored in the memory device of the configuration tag.

It hereby becomes possible to continuously keep track on the remaining amount of detergent at the farm for the cleaning unit. By storing information concerning the remaining amount of detergent in the configuration tag of the detergent container, the detergent container could be moved and used by another cleaning unit at the farm (or even at another farm), while still enabling knowledge of the remaining amount of detergent.

In an eighth implementation of the system according to the first aspect, or according to any previously disclosed implementation thereof, the system comprises an alert emitting device. The obtained information comprises an amount of detergent in the detergent container. The control unit is configured to compare the obtained amount of detergent with a threshold limit. Further, the control unit is configured to generate an alert to be output on the alert emitting device when the amount of detergent in the detergent container is lower than the threshold limit, reminding of replacement of the detergent container.

The amount of detergent used during each cleaning session and periodicity of cleaning sessions are possible to estimate and predict. It could be calculated, by knowledge of currently remaining amount of detergent, when replacement detergent should be bought and obtained in order not to run out of detergent. The risk of running out of detergent at the farm is thereby avoided.

In a ninth implementation of the system according to the first aspect, or according to any previously disclosed implementation thereof, the obtained information comprises expiration date of the detergent in the detergent container. The control unit is configured to compare the obtained expiration date of the detergent with the current date; and perform an action for preventing usage of the detergent in the cleaning unit when the expiration date is older than the current date.

Most if not all chemicals will deteriorate over time and properties of them may change, which may affect the cleaning result. By monitoring the expiration date of the detergent, it is avoided that deteriorated detergent is used during the cleaning session, ascertaining proper sanitary level of the milking equipment.

In a tenth implementation of the system according to the first aspect, or according to any previously disclosed implementation thereof, the control unit is configured to detect a first-time detergent extraction from the detergent container. The control unit is also configured to determine a moment in time when the first-time detergent extraction of the detergent container is detected. The control unit is furthermore configured to transmit the determined moment in time via the wireless communicator to the memory device of the configuration tag for storage therein.

Some chemicals may react with oxygen when exposed to oxygen over a time period exceeding a time limit and as a result deteriorate, which may affect the cleaning result. By monitoring the first-time detergent extraction date of the detergent, which is when the seal of the detergent container is broken and air let into contact with the detergent, it is avoided that deteriorated detergent is used during the cleaning session.

In an eleventh implementation of the system according to the first aspect, or according to any previously disclosed implementation thereof, the control unit is configured to retrieve the moment in time of first-time detergent extraction stored in the memory device of the configuration tag, via the wireless communicator. The control unit is configured to check whether the time difference between a current moment in time and the moment in time of the first-time detergent extraction, exceeds a predetermined time limit. In addition, the control unit is configured to perform an action for preventing detergent extraction from the detergent container when the predetermined time limit is exceeded.

It may be detected that refill of the detergent container has been made, with detergent that may not have the original properties of the detergent referred to by the reference in the configuration tag. The successfulness of the cleaning session is thereby ascertained.

In a twelfth implementation of the system according to the first aspect, or according to any previously disclosed implementation thereof, the system comprises a plurality of detergent containers. The system also comprises a plurality of dosing devices, each one configured to enable detergent to flow from one distinct detergent container to the cleaning unit. The system in addition comprises a plurality of configuration tags, each one associated with a respective detergent container wherein a respective memory device of each configuration tag comprises a respective reference to the detergent of the respectively associated detergent container. The system furthermore comprises a plurality of wireless communicators, each one dedicated to a particular configuration tag. Furthermore, the control unit is configured to select the detergent to be used by the cleaning unit during the cleaning session, based on the obtained reference obtained from the memory device of the configuration tag of the respective detergent container, via the respective wireless communicator.

The control unit may determine, based on the obtained information, which detergent container to be used for the subsequent cleaning session and thereby orchestrate a continuous sequence of cleaning sessions without requiring human interaction. The farmer is thereby relieved from much of the work associated with the cleaning session. The risk of forgetting an in between cleaning session with acid detergent is effectively omitted.

In a thirteenth implementation of the system according to the first aspect, or according to any previously disclosed implementation thereof, the system comprises a sensor, situated in the piece of milking equipment to be cleaned, which sensor is configured to measure a feature of the mixture, during the cleaning session. Furthermore, the control unit is configured to obtain a measurement from the sensor, relating to the applied detergent. Also, the control unit is configured to compare the obtained measurement of the sensor with an expected value of the detergent feature. The control unit is configured to perform an action for preventing subsequent detergent extraction from the detergent container when the obtained measurement does not correspond with the expected value of the detergent feature.

By measuring and evaluating outcome/ result of the cleaning, by the sensor, feed-back of the outcome of the cleaning is achieved and may be used for example for fine tuning the levels of the cleaning parameters used by the cleaning unit, or for detecting that the detergent has deteriorated, is defect or has been replaced with an inferior detergent. Results of the cleaning session is thereby further improved.

According to the invention, the control unit is configured to only enable performance of a pre-programmed cleaning session program for the cleaning device when the cleaning unit is activated while detergent is extracted via the valve devices, from the detergent container to the cleaning device; and no configuration tag associated with the detergent container is detected by the wireless communicator.:
Non-satisfactory cleaning due to usage of non-authorised detergent (not having a configuration tag) is avoided, as the pre-programmed cleaning session program may involve an additionally extended circulation time, higher washing temperature and/ or increased concentration of detergent, thereby taking a margin for avoiding insufficient cleaning of the milking equipment.

In a fourteenth implementation of the system according to the first aspect, or according to any previously disclosed implementation thereof, wherein the piece of milking equipment to be cleaned comprises a milk line and the system comprises a controllable valve, configured to admit gas into the milk line comprising the mixture in order to create a slug acting on the milk line. The system also comprises a vacuum pump, configured to generate an under pressure within the milk line to be cleaned. The control unit is configured to ascertain formation of a slug of liquid comprising the mixture, to clean the milk line by ascertaining that contact is established between the slug and an internal surface of the milk line during a time period, for example via control signalling to the vacuum pump and/ or the controllable valve.

The cleaning session is thereby further optimised.

In a fifteenth implementation of the system according to the first aspect, or according to any previously disclosed implementation thereof, wherein the piece of milking equipment to be cleaned comprises a milk line, the system comprises a pump configured to generate an over pressure and pump the mixture through the milk line such that a cross section of the milk line is filled with the mixture. Furthermore, the control unit is configured to control the pump to ascertain that contact is established between the mixture and an internal surface of the milk line during a time period.

The cleaning session is thereby further optimised.

In a sixteenth implementation of the system according to the first aspect, or according to any previously disclosed implementation thereof, the piece of milking equipment to be cleaned comprises a milk tank.

The cleaning session is thereby further optimised when involving cleaning of the milk tank.

According to a second aspect but not according to the invention, this objective is achieved by a detergent container comprising a detergent. The detergent container is associated with a configuration tag, which detergent is to be used by a cleaning unit of a system according to the first aspect, or any implementation thereof. The memory device of the configuration tag stores a reference of the detergent comprised in the detergent container. The configuration tag is configured to communicate wirelessly with a wireless communicator, external to the detergent container, when the configuration tag is situated within a communication distance from the wireless communicator.

Thanks to the unique reference to the detergent in the configuration tag, the detergent of the detergent container is uniquely identified and properties of the detergent may be obtained by a control unit of a cleaning unit in which the detergent is to be applied for a cleaning session. Parameters of the cleaning unit to be used during the cleaning session may thereby be set automatically, without involving human interaction. The cleaning session may hereby be optimised, resulting in saved resources, while reducing workload of the farmer.

In a first implementation of the detergent container according to the second aspect, the memory device comprises information relating to: temperature during the cleaning session, detergent concentration, cleaning time of the cleaning session, or a combination thereof.

In a second implementation of the detergent container according to the second aspect, or the first implementation thereof, the memory device comprises information relating to: amount of detergent in the detergent container and/ or expiration date of the detergent.

Thereby, by pre-storing and maintaining configuration data of the cleaning unit, the cleaning session may be additionally optimised. Costs, maintenance and work intensity of the farmer associated with management of the cleaning unit/ cleaning session is minimised or at least reduced.

Other advantages and additional novel features will become apparent from the subsequent detailed description.

### FIGURES

Embodiments of the invention will now be described in further detail with reference to the accompanying figures, in which:
- **Figure 1**: illustrates an example of system configured to clean a piece of milking equipment in an agricultural environment.
- **Figure 2**: illustrates a system configured to clean a piece of milking equipment in an agricultural environment, according to an embodiment.
- **Figure 3**: illustrates a system configured to clean a piece of milking equipment in an agricultural environment, according to an embodiment.
- **Figure 4A**: illustrates details of a system configured to clean a piece of milking equipment in an agricultural environment, according to an embodiment.
- **Figure 4B**: illustrates details of a system configured to clean a piece of milking equipment in an agricultural environment, according to an embodiment.
- **Figure 5**: illustrates details of a system configured to clean a piece of milking equipment in an agricultural environment, according to an embodiment.

### DETAILED DESCRIPTION

Embodiments of the invention described herein are defined as a system and a detergent container, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

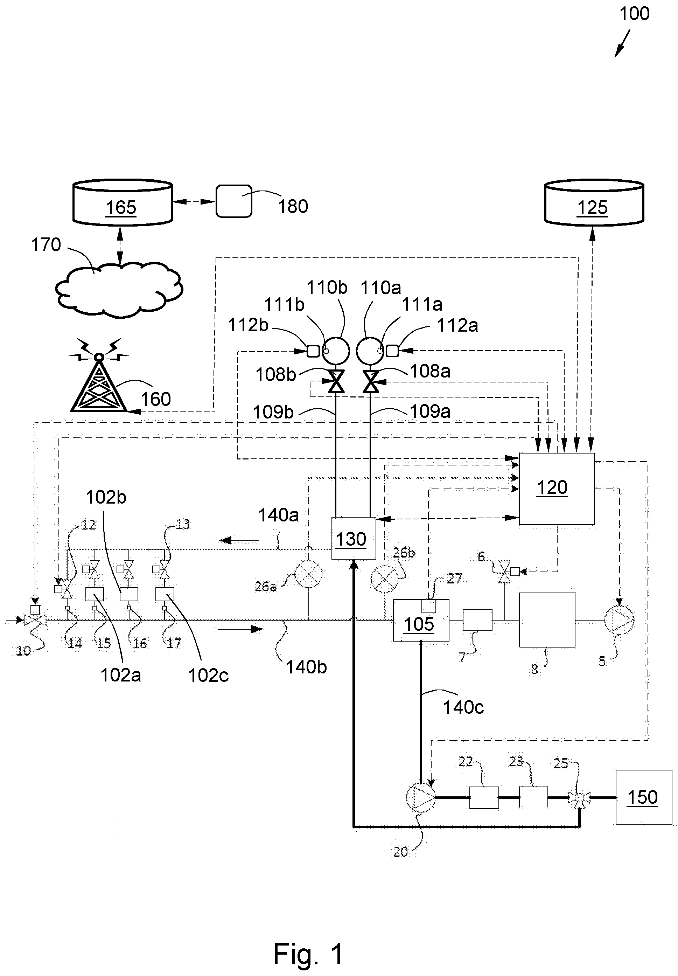

Figure 1 illustrates a scenario with a system 100 for milking of an animal which may be comprised in a herd of dairy animals at a dairy farm, on which the animals are milked in a stationary parlour comprising several milking stations.

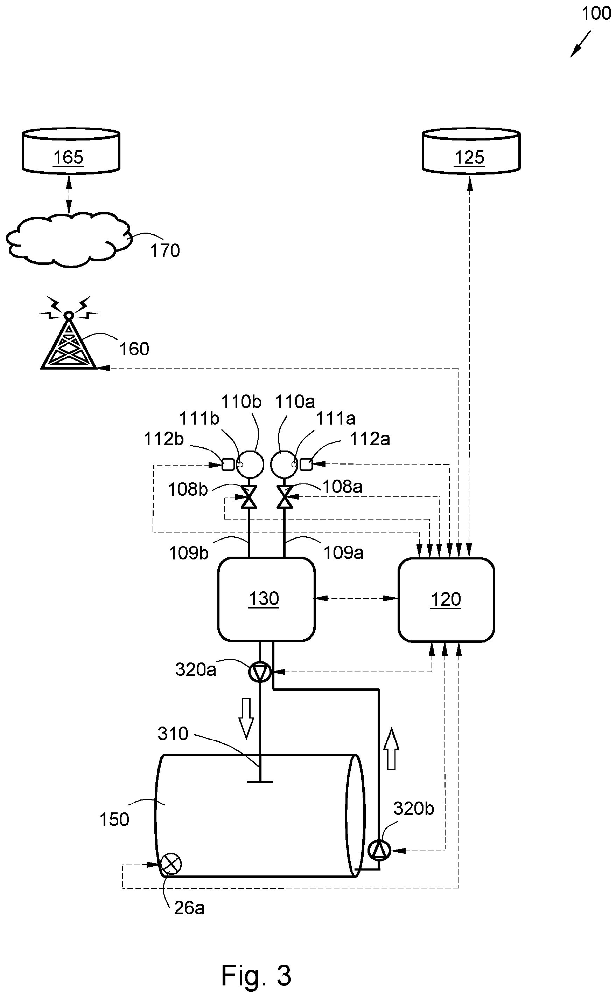

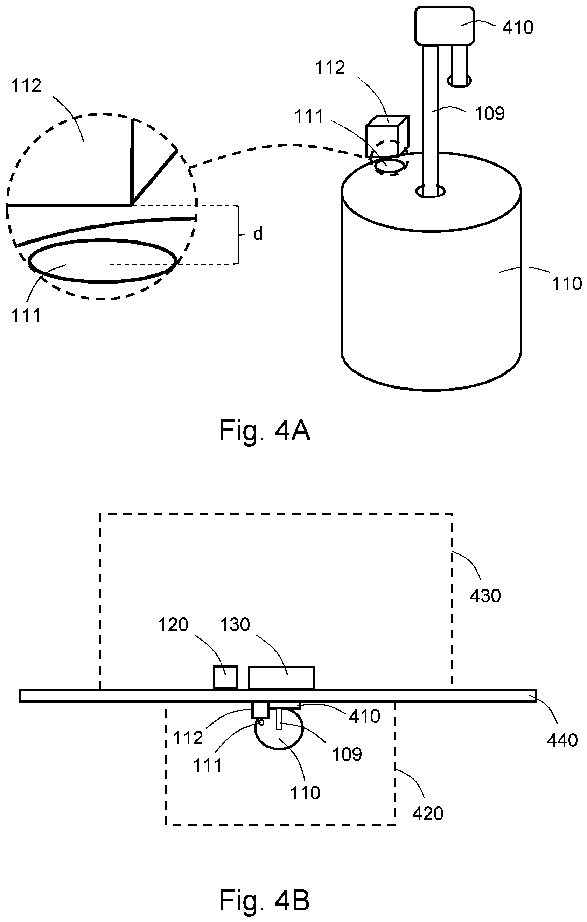

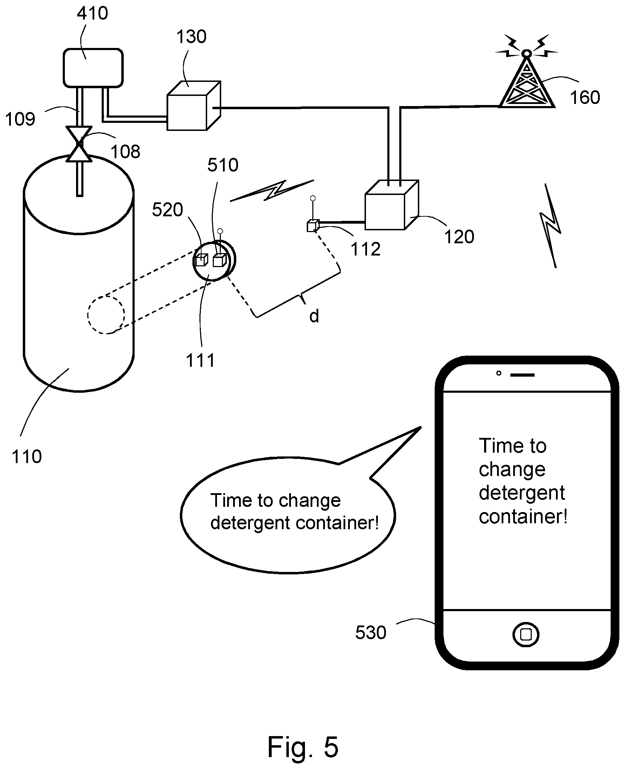

An alternative embodiment wherein the system 100 involves robotic milking is illustrated in Figure 2 and an embodiment wherein the system 100 involves cleaning of a milk tank is illustrated in Figure 3. Figures 4A-4B and 5 illustrate particular implementation details of the solution.

"Animal" may be any arbitrary type of domesticated female milk producing mammal such as cow, goat, sheep, horse, camel, dairy buffalo, donkey, yak, etc.

Milk of the animal may be extracted by a milk extracting arrangement, schematically illustrated in Figure 1. The milk extracting arrangement comprises a milk line 140b and a plurality of milk stations 102a, 102b, 102c connected to the milk line 140b. Each milk station 102a, 102b, 102c comprises milking equipment for the milk extraction.

The milking arrangement further comprises a receiver 105 connected to the milk line 140b and configured to receive milk transported from the milk stations 102a, 102b, 102c to the receiver 105 via the milk line 140b.

There is also provided a vacuum system configured to supply a vacuum in the milk line 140b via the receiver 105. The vacuum system comprises a vacuum pump 5 and a controllable valve 6 configured to introduce gas, preferably atmospheric air, into a line that connects the receiver 105 with the vacuum pump 5. The vacuum supplied by the vacuum system may be controlled by controlling the effect of the vacuum pump 5 and/or the opening and closure of the controllable valve 6. The vacuum system also comprises a sanitary trap 7 and a buffer tank 8, arranged in series, via which the vacuum pump 5 is connected to the receiver 105. The vacuum system is used for supplying a vacuum to the milk line 140b during milking. However, as will be described later, the vacuum system is also used for controlling a cleaning session.

A cleaning unit 130 is connected to one or several detergent containers 110a, 110b comprising a detergent. Detergent may be provided to the cleaning unit 130 via a tubing 109a, 109b and a dosing device 108a, 108b configured to supply the detergent from the detergent container 110a, 110b to the cleaning unit 130. The cleaning unit 130 may then utilise detergent of the detergent container 110a, 110b and water to create a mixture, for cleaning a piece of milking equipment 102, 105, 140a, 140b, 140c, 150 during a cleaning session, with the mixture.

There is also provided a controllable valve 10, or injector, configured to introduce an amount of gas, preferably atmospheric air, into the milk line 140b thus producing a temporary pressure increase therein which causes a slug of the mixture from the cleaning unit 130 to be formed and forwarded through the milk line 140b. The cleaning unit 130 is connected to the milk line 140b in the vicinity of the injector 10 via tubing 140a and a controllable valve 12. The equipment of the milking stations 102a, 102b, 102c are also connectable in a way known per se to the cleaning unit 130 via the tubing 140a and controllable valves 13. Flow meters 14, 15, 16, 17 in connection to the injector 10 and in connection to the milk stations 102a, 102b, 102c may be provided for measuring the flow of the mixture that enters and occupies at least part of the milk line 140b during the cleaning session.

There is provided a pump 20 via which the mixture is pumped from the receiver 105 to the cleaning unit 130. In the specific embodiment shown, the pump 20 is also configured to pump milk from the receiver 105 to a milk tank 150 during milking. In the embodiment shown, the mixture pumped by said pump 20 is pumped to the cleaning unit 130 via a filter 22 and a heat exchanger 23 arranged between the pump 20 and the milk tank 150. A controllable valve 25 is provided for the purpose of directing the pumped mixture towards the cleaning unit 130 instead of towards the milk tank 150. During cleaning, said controllable valve 25 prevents flow of the mixture into the milk tank 150.

The milking arrangement further comprises a control unit 120 configured to control the operation of the injector 11, the vacuum pump 5 and the controllable valve 6 of the vacuum system. The control unit 120 is configured to control the vacuum level supplied by the vacuum system by controlling at least one of the vacuum pump 5 and the controllable valve 6. The control system is thereby configured to control the rpm of the vacuum pump 5 and the opening time of the controllable valve 6. A pressure sensor may be provided in a line connecting the vacuum pump 5 with the receiver 105, and the control unit 120 may be configured to control the vacuum system on basis of input from said pressure sensor.

The control unit 120 is also configured to control slug characteristics by controlling the amount of gas per time unit introduced via the controllable injector 10. The controllable injector 10 presents a channel that has a controllable variable cross section, and the control unit 120 may be configured to control said variable cross section of the channel for controlling the amount of gas per time unit introduced via the controllable injector 10. The slug characteristics controlled by the control unit 120 thereby comprises the slug velocity of an individual slug and the length of an individual slug.

The control unit 120 is also configured to control the operation of the controllable valves 12, 13 via which the cleaning liquid from the cleaning liquid source 9 is allowed to enter the milk line 140b either via the injector 10 or via the milking equipment of the milk stations 102a, 102b, 102c. The control unit 120 is also configured to control the operation of the pump 20 via which mixture is pumped from the receiver 105 to the cleaning unit 130.

The control unit 120 is here exemplified by locally positioned unit which comprises a processor and a readable memory. Alternative embodiments, such as cloud-based solutions are also conceivable, i.e. that the control unit 120 is remotely positioned while communicationally connected to the above-mentioned entities via a telecommunication network. In yet some embodiments, the control unit 120 may be distributed and comprise a locally positioned unit, performing some of the described actions and in addition a remotely positioned, communicationally connected control unit performing some other actions.

A cleaning unit 130 is connected to the milk line 140b. The cleaning unit 130 is also connected to one or several detergent containers 110a, 110b, via a respective tubing 109a, 109b and dosing device 108a, 108b, configured to enable detergent to flow from the detergent container 110a, 110b to the cleaning unit 130, when required.

The detergent container 110a, 110b may be situated in the same area as, and in relative closeness of the cleaning unit 130 in some embodiments. However, it is often desired to keep the detergent container 110a, 110b and the cleaning unit 130 in separate rooms concentrated detergent may cause damages such as corrosion. Keeping the detergent container 110a, 110b in a separate room (for example with a separate entrance) may also simplify exchange of the detergent container 110a, 110b. In those embodiments, the tubing 109a, 109b may pass a wall between the two separate respective rooms. The latter embodiment is further described in Figures 4A and 4B.

The control unit 120 may be communicationally connected to the dosing device 108a, 108b, thereby enabling the control unit 120 to provide and/ or prevent, respectively, detergent from the corresponding detergent container 110a, 110b to the cleaning unit 130. The control unit 120 is thereby enable to orchestrate the detergent management and providing the appropriate detergent, as determined based on reference/ information on the configuration tag 111a, 111b, to the cleaning unit 130 at the appropriate moment in time. Also, for example a pump may be communicationally connected to and controlled by the control unit 120 for this purpose.

The cleaning unit 130 may use distinct types of detergent for different purposes, at different time intervals. Alkaline detergent may be used for frequent cleaning/ disinfection (one or several times a day), while acid detergent may be applied intermittently for dissolving scale formed over time in the milking equipment. A dedicated disinfectant may be used in some embodiments, added to the detergent or used separately from the detergent.

The detergent container 110a, 110b comprises a configuration tag 111a, 111b, associated with the detergent container 110a, 110b, wherein a memory device of the configuration tag 111a, 111b comprises a reference to the detergent of the detergent container 110a, 110b.

The reference may comprise information that uniquely identify the detergent of the detergent container 110a, 110b, such as a name, a letter, a code, a number, a geometric shape, a colour, a string of letters, etc., of the detergent.

The system 100 also comprises one or several wireless communicators 112a, 112b, configured to communicate wirelessly with the configuration tag 111a, 111b and to retrieve the reference to the detergent from the memory device of the configuration tag 111a, 111b, when the configuration tag 111a, 111b is situated within a communication distance from the wireless communicator 112a, 112b.

The communication between the wireless communicator 112a, 112b and the configuration tag 111a, 111b may be made by short distance wireless communication, such as for example Near Field Communication (NFC) or Radio-frequency identification (RFID).

NFC is a set of communication protocols for communication between two electronic devices over a distance of up to some few centimetres, such as e.g. 4-20 centimetres.

In an RFID implementation, the wireless communicator 112a, 112b transmits an electromagnetic interrogation pulse, which triggers and energize a radio transponder of the configuration tag 111a, 111b to transmit digital data, such as the reference uniquely identifying the detergent, back to the wireless communicator 112a, 112b.

Different detergents, also when being of the same general type (alkaline/ acid) may have different qualities, chemical composition, concentration, and other properties that affect the cleaning session of the cleaning unit 130. Thus, settings of washing parameters of the cleaning unit 130 may have to be changed, or at least checked between each swap of detergent.

The control unit 120 may in some embodiments, based on the obtained reference, extract information related to the detergent in order to set the parameter of the cleaning unit 130. The information may be extracted from the memory device of the configuration tag 111a, 111b, and/ or from a local database 125, and/ or from a remote database 165 which may be accessible via a telecommunication network 170 and/ or a wireless transceiver 160.

The extracted information may for example comprise a reference to a predetermined cleaning program to be used by the cleaning unit 130 during the cleaning session of the milking equipment 102, 105, 140a, 140b, 140c, 150, for the particular detergent of the detergent container 110a, 110b.

A non-limiting example: the obtained reference to the detergent "α" may be associated with the cleaning program "0" while the detergent "β" may be associated with the cleaning program "1". The details (time, concentration, temperature, etc.) of the respective cleaning programs may also be stored for example in the local database 125 and provided to the cleaning unit 130.

In some embodiments, the extracted additional information may comprise a reference to a cleaning program, temperature to be kept during the cleaning session, detergent concentration, cleaning time of the cleaning session, or a combination thereof. In other embodiments, the extracted additional information may comprise information to add additional detergent (in case non-chlorinated detergent is used), for example. In yet some embodiments, the extracted information may relate to amount of detergent in the detergent container 110a, 110b and/ or expiration date of the detergent.

The information, or some parts thereof, may in some embodiments be comprised in the memory of the configuration tag 111a, 111b of the detergent container 110a, 110b. Alternatively, or additionally, the information, or some parts thereof, may be comprised in the local database 125 and/ or a remote database 165.

By extracting the information associated with the detergent of the detergent container 110a, 110b, and setting parameters of the cleaning unit 130 based on this information, the tedious manual setting/ selection of parameters for the cleaning unit 130 is omitted as the process becomes automated. Hereby time of the farmer is saved, and he/ she could instead focus on the well-being and comfort of the animal crew. Also, the risk of human errors/ misprints when entering parameters of the cleaning unit 130 is omitted.

Another advantage of the described solution is that risks of entering inappropriate cleaning parameters for a particular detergent, or to forget changing cleaning parameters when changing detergent is eliminated.

Cleaning parameters could be set with different focus targets in mind. National legislation/ sanitary restrictions (which may be different in different legislations) and/ or sanitary regulations of the diary collecting the milk must be fulfilled by the cleaning program, otherwise the milk may have to be wasted or at least not be used for human consumption. This forms a minimum requirement of sanitary that must be satisfied during each cleaning session.

Some producers may desire to keep an additional sanitary level on their farm, accepting no compromise in the cleaning process which may affect milk quality, which may result in a parameter setting involving higher temperature, longer circulation time for the cleaning program, higher concentration of detergent in the detergent/ water mixture, etc., in comparison with the first mentioned case.

Yet other producers may focus on minimising the time used during the cleaning session. As already mentioned, the milking equipment cannot be used during the cleaning session, why the cleaning session put the milk production on hold. This may result in a parameter setting involving higher temperature and/ or higher concentration of detergent in the detergent/ water mixture, and/ or selection of a detergent having a chemical composition being more efficient, in comparison with the first mentioned case.

There are also other producers may focus on minimising costs of the cleaning session, while yet fulfilling the above-mentioned sanitary restrictions. The costs of the cleaning session will vary depending on for example selected detergent, energy price (for heating the mixture to the cleaning temperature),. The costs are also dependent on local parameters, such as length and/ or diameter of the milk line, whether the milk line is heat isolated or not and similar factors which may be different on different farms.

There may in addition be producers focusing on minimising climate affection of the cleaning session and eutrophication of the detergent, for example by reducing used temperature while extending cleaning time and/ or reducing concentration of detergent in the mixture.

Thanks to the provided solution, the parameters of the cleaning unit 130 may be set by the control unit 120 according to the endeavoured goals of the producer, thereby not only ensuring that national legislation/ sanitary restrictions are fulfilled, but also that the desired goal of the producer is endeavoured.

In some embodiments, the control unit 120 may be connected to a remote database 165, for example provided by a service provider 180 such as for example the producer of the detergent of the applied detergent container 110a, 110b. Hereby, the farm may instantly take part of new development of the research department of the detergent producer 180 (concerning for example the optimal cleaning temperature/ concentration, etc.), of a particular detergent. The cleaning session may thereby be additionally optimised.

In yet some embodiments, the system 100 may comprise one or several sensors 26a, 26b situated in or at the milking equipment 102, 105, 140a, 140b, 140c, 150 to be cleaned. The sensors 26a, 26b may be of the same or different types, such as for example temperature sensor, liquid flow sensor, connectivity sensor, etc. The sensor 26a, 26b may be communicationally connected with the control unit 120, which may adapt the cleaning session according to feedback from the sensor 26a, 26b, in some embodiments.

In alternative embodiments, the control unit 120 may provide the captured sensor detections of the sensor 26a, 26b to the detergent usage optimisation service provider 180, for example the producer of the detergent, who, based on the provided sensor detections may adjust recommended cleaning programs and/ or settings of the cleaning unit 130 based there upon, possibly also based on other known information comprising, length of milking line, etc., which is specific for the particular farm. This revised recommended parameter settings may then be returned to the control unit 120 at the farm for implementation. The optimisation of the cleaning session may hereby be further improved.

An example of an implemented cleaning session of the milking equipment 102, 105, 140a, 140b, 140c, 150 will now briefly be described. The cleaning session is in this case made by using an alkaline detergent and may be performed after the milking event of the herd. The cleaning session may comprise a pre-rinsing phase, a main cleaning phase and a post-rinsing phase. However, other programs may comprise a disinfection phase, an acid detergent phase, and/ or additional post rinsing phases, for example.

During the pre-rinsing phase, lukewarm water is flushed through the milking equipment 102, 105, 140a, 140b, 140c, 150, suggestibly without circulation, in order to remove milk residues.

The pre-rinsing phase is followed by the main cleaning phase, wherein the cleaning unit 130 mix the detergent with water into a mixture, which is heated (for example into 50°-90°), for cleaning the milking equipment 102, 105, 140a, 140b, 140c, 150. During the main cleaning phase, the mixture of detergent and water may be circulating through the milking equipment 102, 105, 140a, 140b, 140c, 150 repeatedly, for a certain time period. During the circulation, a slug may be generated as previously described, filling up an interior cross section area of the milking line 140b.

After the main cleaning phase, a post-rinsing phase is performed, for removing remains of the detergent from the milking equipment 102, 105, 140a, 140b, 140c, 150. The post-rinsing may be made by letting tap water rinse through the milking equipment 102, 105, 140a, 140b, 140c, 150 without circulation.

In some cleaning programs, a means of disinfection may be entered into the milking equipment 102, 105, 140a, 140b, 140c, 150 after the post-rinsing phase, to inhibit bacterial growth/ mould, etc., within the milking equipment 102, 105, 140a, 140b, 140c, 150.

The optional step of disinfection may then be followed by a second post-rinsing phase, similar to the above described post-rinsing phase.

Figure 2 describes a milking system 100 at a farm wherein robotic milking is applied.

The milking system 100 comprises plurality of milking stations 102, a milk tank 150, a milk line140b extending from the milking station 102 to the milk tank 150.

The milking stations 102 comprise milking robots configured to automatically milk animals that enter the respective milking station 102. The milk tank 150 is a cooling tank in which large volumes of milk are gathered in connection to harvesting of milk in the milking system 100. The cooling tank 150 is emptied on a regular basis, for example by means of milk lorries.

The milk line 140b is connected to the milking stations 102. The milk line 140b comprises a loop 140a to which the milking stations 102 are connected, and a part 140b which extends from the loop 140a to the tank 150. The loop 140a may have a length in the order of 100 meters or more, while the further part 140b may be considerably shorter, for example 10 meters (non-limiting examples). A valve arrangement 4, 5 is configured to control the flow of milk from the milking station 102 to the milk tank 150. In the drawing, only two valves 4, 5 are provided; in other embodiments, less or more valves may be involved in the valve arrangement.

The valves 4, 5 may be controlled by a control unit 120 for controlling the operation of the milking system 100.

The milking system 100 also comprises a cleaning unit 130 configured to introduce a mixture of detergent and water into the milk line 140b and to transport the mixture through at least a major part of the milk line 140b. The cleaning unit 130 may comprise a delivery arrangement configured to deliver the mixture into the milk line 140b. The cleaning unit 130 may form a circuit together with the milk line 140b. The cleaning arrangement 130 further may comprise a pump 8, for example a centrifugal pump, for pumping the mixture through the milk line 140b.

The cleaning unit 130 is also connected to one or several detergent containers 110a, 110b, via a respective tubing 109a, 109b and dosing device 108a, 108b, configured to enable detergent to flow from the detergent container 110a, 110b to the cleaning unit 130, when required.

Each of the detergent containers 110a, 110b comprises a configuration tag 111a, 111b wherein a memory device of the configuration tag 111a, 111b comprises a reference to the detergent of the detergent container 110a, 110b. A wireless communicator 112a, 112b is configured to communicate wirelessly with the configuration tag 111a, 111b and to retrieve the reference to the detergent from the memory device of the configuration tag 111a, 111b, when the configuration tag 111a, 111b is situated within a communication distance d from the wireless communicator 112a, 112b, i.e. in a dedicated position of the detergent container 110a, 110b for example in a detergent room.

The control unit 120 may then as previously described obtain the reference to the detergent via the wireless communicator 112a, 112b and set a parameter of the cleaning unit 130 for the cleaning session, based on the obtained reference.

The propagation of the mixture is made differently in the embodiment illustrated in Figure 2 than the previously described embodiment in Figure 1. Instead of creating a slug of the mixture, a column of water/ detergent mixture is pushed through the milk line 140b, by over pressure generated by the pump 8, which is configured to pump liquid comprising detergent through the milk line 140b such that a cross section of the milk line 140b, is filled with liquid.

The cleaning unit 130 may comprise a tray 12 in which detergent and water is mixed before being conducted via a first conduit 11 to the pump 8 in some embodiments. The control unit 120 is configured to start and operate the mixing of detergent and water by controlling dosing devices 108a, 108b. The amount of water/ detergent mixture to be delivered for the cleaning session may be preset in accordance with a predetermined cleaning program.

The control unit 120 may be configured to control the pump 8 to ascertain that contact is established between the mixture and an internal surface of the milk line 140b during a time period in a loop for circulation, for ascertaining proper cleaning of the milk line 140b.

Otherwise, the program of the cleaning session may comprise the same element as previously described, i.e. a pre-rinsing phase, a main cleaning phase and a post- rinsing phase.

Figure 3 illustrates an embodiment wherein a milk tank 150 is cleaned by the cleaning unit 130. The milk tank 150 is maintaining the extracted milk of each milking session and is normally chilled to a temperature of about 1°-8°C, approximately corresponding to a refrigerator. Thus, cleaning of the milk tank 150 does not have to be made with the same frequency as cleaning of the milk line and certain other milking equipment. Instead, the milk tank 150 may be cleaned when the milk lorry has collected the milk and the milk tank 150 is empty, which may be some days a week.

The cleaning unit 130 is connected to one or several detergent containers 110a, 110b, via a respective tubing 109a, 109b and dosing device 108a, 108b, configured to enable detergent to flow from the detergent container 110a, 110b to the cleaning unit 130, when required.

The detergent container 110a, 110b comprises or is associated with a configuration tag 111a, 111b comprising a reference to the detergent of the detergent container 110a, 110b.

The system 100 also comprises a wireless communicator 112a, 112b, communicatively connected with the control unit 120. The wireless communicator 112a, 112b is configured to communicate wirelessly with the configuration tag 111a, 111b and to retrieve the reference to the detergent from the memory device of the configuration tag 111a, 111b, when the configuration tag 111a, 111b is situated within a communication distance from the wireless communicator 112a, 112b.

The control unit 120 may then obtain the reference to the detergent via the wireless communicator 112a, 112b and set at least one parameter of the cleaning unit 130 for the cleaning session, based on the obtained reference.

The cleaning session of the milk tank 150 may comprise a pre-rinsing phase, a main cleaning phase and a post-rinsing phase as previously described.

A pump 320a may forward liquid, either water during rinsing phases, and/ or a mixture of water and detergent during the main cleaning phase, to a rotating nozzle 310, or some corresponding arrangement internal to the milk tank 150. The mixture may then be ejected over the internal walls of the milk tank 150.

The liquid used during pre-/ post rinsing phases may be wasted from a tap at the bottom of the milk tank 150 while the mixture used during the main cleaning phase may be brought into circulation for example by another pump 320b for returning mixture back to the cleaning unit 130.

Figure 4A illustrates an embodiment wherein the detergent container 110 is situated in a separate room separate from the room comprising the cleaning unit 130, as regarded from a side view. Figure 4B illustrates the same arrangement as regarded from a top view.

The detergent container 110may be situated in a separate room 420, separated from the other room 430 comprising the cleaning unit 130. In the illustrated embodiment, the detergent container 110 is separated from the cleaning unit 130 by a wall 440.

The detergent container 110 comprises a configuration tag 111, associated with the detergent container 110, comprising a reference to the detergent of the detergent container 110.

A wireless communicator 112, configured to communicate wirelessly with the configuration tag 111 of the detergent container 110 when situated within a communication distance d therefrom. The wireless communicator 112 may be situated in a position in the separate room 420 for detergent containers so that the configuration tag 111 may be detected and communicated only when the detergent container 110 is correctly positioned for allowing a dosing device 410, controlled by the control unit 120, to provide detergent from the detergent container 110 to the cleaning unit 130 via the tubing 109. The dosing device 410 may comprise a pump such as for example comprise a hose pump.

By maintaining the detergent container/s 110 in a separate room 420, it is avoided that leaking detergent of the detergent container 110 could cause damage such as corrosion to neighbour equipment.

As illustrated in the embodiment illustrated in Figure 5, the configuration tag 111 comprises a memory device 520 comprising a reference to the detergent of the detergent container 110, and a wireless transceiver 510, configured for wireless communication with the wireless communicator 112.

The system 100 may in some embodiments comprise an alert emitting device 530. The control unit 120 may emit various information concerning detected anomalies of the detergent of the detergent container 110 to the alert emitting device 530, for example when it is time to change/ refill detergent; that the expiration date of the detergent has passed; that the detergent container 110 has been refilled; that there may be a leak in the detergent container 110; that analysis of feedback information of the sensors 26a, 26b indicates that the detergent has deteriorated or has been replaced, etc.

The alert emitting device 530 may be a mobile telephone of the farmer, a screen, a siren/ loud noise-making device, a tactile device, or a combination of at least some of these features.

When a deviation, exceeding a threshold limit, is detected between an expected value of a detergent parameter (reference value) and outcome of a corresponding detergent-related measurement, the alert may be outputted to the alert emitting device 530. The alert may comprise e.g. visual information, an audio message, a tactile signal or a combination thereof, encouraging the farmer to further investigate the reasons for the detected deviation in result. In case a plurality of people is working with the herd, a broadcast may be made to the plurality of farmers and their respective associated alert emitting devices 530, in some embodiments.

Thereby, the work of the agricultural manager/ farmer is further facilitated.

The embodiments, or parts thereof, illustrated in Figure 1, Figure 2, Figure 3, Figure 4A, Figure 4B and/ or Figure 5 may with advantage be combined with each other for achieving further benefits.

The terminology used in the description of the embodiments as illustrated in the accompanying drawings is not intended to be limiting of the described system 100, control unit 120, detergent container 110a, 110b, cleaning unit 130, dosing device 108a, 108b, 410, configuration tag 111a, 111b, and wireless communicator 112a, 112b. Various changes, substitutions and/ or alterations may be made, without departing from the scope of the invention as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof.

## Claims

1. A system (100) configured to clean a piece of milking equipment (102, 105, 140a, 140b, 140c, 150) in an agricultural environment, which system (100) comprises:
a detergent container (110a, 110b) comprising a detergent;
a cleaning unit (130), configured to utilise detergent of the detergent container (110a, 110b) and water to create a mixture and to clean the piece of milking equipment (102, 105, 140a, 140b, 140c, 150) during a cleaning session with the mixture;
a dosing device (108a, 108b, 410) configured to supply the detergent from the detergent container (110a, 110b) to the cleaning unit (130);
wherein the system (100) is **characterised by:**
a configuration tag (111a, 111b), associated with the detergent container (110a, 110b), wherein a memory device (520) of the configuration tag (111a, 111b) comprises a reference to the detergent of the detergent container (110a, 110b);
a wireless communicator (112a, 112b), configured to communicate wirelessly with the configuration tag (111a, 111b) and to retrieve the reference to the detergent from the memory device (520) of the configuration tag (111a, 111b), when the configuration tag (111a, 111b) is situated within a communication distance (d) from the wireless communicator (112a, 112b); and
a control unit (120), configured to
obtain the reference to the detergent via the wireless communicator (112a, 112b) from the memory device (520) of the configuration tag (111a, 111b); and
set at least one parameter of the cleaning unit (130) for the cleaning session, based on the obtained reference;
wherein the control unit (120) is configured to only enable performance of a pre-programmed cleaning session program for the cleaning device (130), when the cleaning unit (130) is activated while detergent is extracted via the dosing devices (108a, 108b, 410), from the detergent container (110a, 110b) to the cleaning device (130), and no configuration tag (111a, 111b) associated with the detergent container (110a, 110b) is detected by the wireless communicator (112a, 112b).

2. The system (100) according to claim 1, wherein the control unit (120) is configured to obtain information relating to temperature to be kept during the cleaning session, detergent concentration, cleaning time of the cleaning session, or a combination thereof.

3. The system (100) according to claim 2, wherein the memory device (520) of the configuration tag (111a, 111b) comprises the information; and wherein the control unit (120) is configured to obtain the information via the wireless communicator (112a, 112b) from the memory device (520) of the configuration tag (111a, 111b).

4. The system (100) according to any one of claims 2-3, comprising
a database (125, 165) comprising the information associated with the reference to the detergent comprised in the detergent container (110a, 110b); and wherein the control unit (120) is configured to
obtain the reference to the detergent from the configuration tag (111a, 111b) via the wireless communicator (112a, 112b);
provide the obtained reference to the database (125, 165); and
retrieve the information associated with the reference from the database (125, 165).

5. The system (100) according to claim 4, comprising a communication device (160) configured to communicate with the database (125, 165) over a communication network (170); and wherein the control unit (120) is configured to obtain the information from the database (125, 165) via the communication device (160).

6. The system (100) according to any one of claims 1-5, wherein the parameter of the cleaning unit (130) to be set by the control unit (120) for the cleaning session comprises:
cleaning time of the cleaning session;
temperature to be kept by the cleaning unit (130) during the cleaning session;
concentration of the detergent; and/ or
contact surface time between the mixture and interior surfaces of the milking equipment (102, 105, 140a, 140b, 140c, 150) to be cleaned.

7. The system (100) according to any one of claims 2-6, wherein the obtained information comprises amount of detergent in the detergent container (110a, 110b); and wherein the control unit (120) is configured to
estimate amount of detergent used by the cleaning unit (130) during the cleaning session;
calculate a remaining amount of detergent in the detergent container (110a, 110b) after the cleaning session, by subtracting the estimated used amount of detergent from the obtained amount of detergent; and
transmit information related to the remaining amount of detergent via the wireless communicator (112a, 112b) to the configuration tag (111a, 111b), for updating the information comprising the amount of detergent in the detergent container (110a, 110b) stored in the memory device (520) of the configuration tag (111a, 111b).

8. The system (100) according to any one of claims 2-7, comprising an alert emitting device (530); and wherein the obtained information comprises an amount of detergent in the detergent container (110a, 110b); and wherein the control unit (120) is configured to
compare the obtained amount of detergent with a threshold limit; and
generate an alert to be output on the alert emitting device (530) when the amount of detergent in the detergent container (110a, 110b) is lower than the threshold limit, reminding of replacement of the detergent container (110a, 110b).

9. The system (100) according to any one of claims 1-8, wherein the control unit (120) is configured to
detect a first-time detergent extraction from the detergent container (110a, 110b);
determine a moment in time when the first-time detergent extraction of the detergent container (110a, 110b) is detected; and
transmit the determined moment in time via the wireless communicator (112a, 112b) to the memory device (520) of the configuration tag (111a, 111b) for storage therein.

10. The system (100) according to claim 9, wherein the control unit (120) is configured to
retrieve the moment in time of first-time detergent extraction stored in the memory device (520) of the configuration tag (111a, 111b), via the wireless communicator (112a, 112b);
check whether the time difference between a current moment in time and the moment in time of the first-time detergent extraction, exceeds a predetermined time limit; and
perform an action for preventing detergent extraction from the detergent container (110a, 110b) when the predetermined time limit is exceeded.

11. The system (100) according to any one of claims 1-10, comprising
a plurality of detergent containers (110a, 110b);
a plurality of dosing devices (108a, 108b, 410), each one configured to enable detergent to flow from one distinct detergent container (110a, 110b) to the cleaning unit (130);
a plurality of configuration tags (111a, 111b), each one associated with a respective detergent container (110a, 110b) wherein a respective memory device (520) of each configuration tag (111a, 111b) comprises a respective reference to the detergent of the respectively associated detergent container (110a, 110b);
a plurality of wireless communicators (112a, 112b), each one dedicated to a particular dosing device (108a, 108b, 410); and wherein the control unit (120) is configured to:
select the detergent to be used by the cleaning unit (130) during the cleaning session, based on the obtained reference obtained from the memory device (520) of the configuration tag (111a, 111b) of the respective detergent container (110a, 110b), via the respective wireless communicator (112a, 112b).

12. The system (100) according to any one of claims 1-11, comprising
a sensor (26a, 26b), situated in the piece of milking equipment (102, 105, 140a, 140b, 140c, 150) to be cleaned, which sensor (26a, 26b) is configured to measure a feature of the detergent, during the cleaning session; and wherein the control unit (120) is configured to
obtain a measurement from the sensor (26a, 26b), relating to the applied detergent;
compare the obtained measurement of the sensor (26a, 26b) with an expected value of the detergent feature; and
perform an action for preventing detergent extraction from the detergent container (110a, 110b) when the obtained measurement does not correspond with the expected value of the detergent feature.

13. The system (100) according to any one of claims 1-12, wherein the piece of milking equipment (102, 105, 140a, 140b, 140c, 150) to be cleaned comprises a milk line (140a, 140b, 140c) and the system (100) comprises
a controllable valve (10), configured to admit gas into the milk line (140a, 140b, 140c) comprising the mixture in order to create a slug acting on the milk line (140a, 140b, 140c); and
a vacuum pump (20), configured to generate an under pressure within the milk line (140a, 140b, 140c) to be cleaned; and wherein
the control unit (120) is configured to ascertain formation of a slug of the mixture, to clean the milk line (140a, 140b, 140c) by ascertaining that contact is established between the slug and an internal surface of the milk line (140a, 140b, 140c) during a time period.

14. The system (100) according to any one of claims 1-12, wherein the piece of milking equipment (102, 105, 140a, 140b, 140c, 150) to be cleaned comprises a milk line (140a, 140b, 140c) and the system (100) comprises
a pump (8) configured to generate an over pressure and pump the mixture through the milk line (140a, 140b, 140c) such that a cross section of the milk line (140a, 140b, 140c) is filled with the mixture; and wherein
the control unit (120) is configured to control the pump (8) to ascertain that contact is established between the mixture and an internal surface of the milk line (140a, 140b, 140c) during a time period.

15. The system (100) according to any one of claims 1-12, wherein the piece of milking equipment (102, 105, 140a, 140b, 140c, 150) to be cleaned comprises a milk tank (150).

## Patentansprüche

1. System (100), das konfiguriert ist, um ein Teil einer Melkausrüstung (102, 105, 140a, 140b, 140c, 150) in einer landwirtschaftlichen Umgebung zu reinigen, wobei das System (100) umfasst:
einen Waschmittelbehälter (110a, 110b), umfassend ein Waschmittel;
eine Reinigungseinheit (130), die konfiguriert ist, um Waschmittel des Waschmittelbehälters (110a, 110b) und Wasser zu nutzen, um eine Mischung herzustellen und um das Teil der Melkausrüstung (102, 105, 140a, 140b, 140c, 150) während eines Reinigungsvorgangs mit der Mischung zu reinigen;
eine Dosiervorrichtung (108a, 108b, 410), die konfiguriert ist, um das Waschmittel aus dem Waschmittelbehälter (110a, 110b) der Reinigungseinheit (130) zuzuführen;
wobei das System (100) **gekennzeichnet ist durch:**
ein Konfigurationskennzeichen (111a, 111b), das dem Waschmittelbehälter (110a, 110b) zugeordnet ist, wobei eine Speichervorrichtung (520) des Konfigurationskennzeichens (111a, 111b) einen Verweis auf das Waschmittel des Waschmittelbehälters (110a, 110b) umfasst;
einen Drahtloskommunikator (112a, 112b), der konfiguriert ist, um mit dem Konfigurationskennzeichen (111a, 111b) drahtlos zu kommunizieren und um den Verweis auf das Waschmittel aus der Speichervorrichtung (520) des Konfigurationskennzeichens (111a, 111b) abzurufen, wenn das Konfigurationskennzeichen (111a, 111b) innerhalb einer Kommunikationsdistanz (d) von dem Drahtloskommunikator (112a, 112b) liegt; und
eine Steuereinheit (120), die konfiguriert ist zum
Erhalten des Verweises auf das Waschmittel über den Drahtloskommunikator (112a, 112b) aus der Speichervorrichtung (520) des Konfigurationskennzeichens (111a, 111b); und
Einstellen mindestens eines Parameters der Reinigungseinheit (130) für den Reinigungsvorgang basierend auf dem erhaltenen Verweis;
wobei die Steuereinheit (120) konfiguriert ist, um eine Durchführung eines vorprogrammierten Reinigungsvorgangsprogramms für die Reinigungsvorrichtung (130) nur dann zu ermöglichen, wenn die Reinigungsvorrichtung (130) aktiviert ist, während Waschmittel über die Dosiervorrichtungen (108a, 108b, 410) aus dem Waschmittelbehälter (110a, 110b) zu der Reinigungsvorrichtung (130) entnommen wird und kein Konfigurationskennzeichen (111a, 111b), das dem Waschmittelbehälter (110a, 110b) zugeordnet ist, **durch** den Drahtloskommunikator (112a, 112b) erkannt wird.

2. System (100) nach Anspruch 1, wobei die Steuereinheit (120) konfiguriert ist, um Informationen bezogen auf Temperatur, die während des Reinigungsvorgangs aufrechtzuerhalten ist, Waschmittelkonzentration, Reinigungszeit des Reinigungsvorgangs oder eine Kombination davon zu erhalten.

3. System (100) nach Anspruch 2, wobei die Speichervorrichtung (520) des Konfigurationskennzeichens (111a, 111b) die Informationen umfasst; und wobei die Steuereinheit (120) konfiguriert ist, um die Informationen über den Drahtloskommunikator (112a, 112b) aus der Speichervorrichtung (520) des Konfigurationskennzeichens (111a, 111b) zu erhalten.

4. System (100) nach einem der Ansprüche 2 bis 3, umfassend
eine Datenbank (125, 165), umfassend die Informationen, die dem Verweis auf das Waschmittel, das in dem Waschmittelbehälter (110a, 110b) enthalten ist, zugeordnet sind; und wobei die Steuereinheit (120) konfiguriert ist zum
Erhalten des Verweises auf das Waschmittel aus dem Konfigurationskennzeichen (111a, 111b) über den Drahtloskommunikator (112a, 112b);
Bereitstellen des erhaltenen Verweises an die Datenbank (125, 165); und
Abrufen der Informationen, die dem Verweis zugeordnet sind, aus der Datenbank (125, 165).

5. System (100) nach Anspruch 4, umfassend eine Kommunikationsvorrichtung (160), die konfiguriert ist, um mit der Datenbank (125, 165) über ein Kommunikationsnetzwerk (170) zu kommunizieren; und wobei die Steuereinheit (120) konfiguriert ist, um die Informationen aus der Datenbank (125, 165) über die Kommunikationsvorrichtung (160) zu erhalten.

6. System (100) nach einem der Ansprüche 1 bis 5, wobei der Parameter der Reinigungseinheit (130), der durch die Steuereinheit (120) für den Reinigungsvorgang einzustellen ist, umfasst: Reinigungszeit des Reinigungsvorgangs;
Temperatur, die durch die Reinigungseinheit (130) während des Reinigungsvorgangs aufrechtzuerhalten ist; Konzentration des Waschmittels; und/oder
Kontaktoberflächenzeit zwischen der Mischung und Innenoberflächen der zu reinigenden Melkausrüstung (102, 105, 140a, 140b, 140c, 150).

7. System (100) nach einem der Ansprüche 2 bis 6, wobei die erhaltenen Informationen eine Menge des Waschmittels in dem Waschmittelbehälter (110a, 110b) umfassen; und wobei die Steuereinheit (120) konfiguriert ist zum
Schätzen der Menge des Waschmittels, das durch Reinigungseinheit (130) während des Reinigungsvorgangs verwendet wird;
Berechnen einer Restmenge des Waschmittels in dem Waschmittelbehälter (110a, 110b) nach dem Reinigungsvorgang durch Subtrahieren der geschätzten verwendeten Menge des Waschmittels von der erhaltenen Menge des Waschmittels; und
Übertragen von Informationen bezogen auf die Restmenge des Waschmittels über den Drahtloskommunikator (112a, 112b) an das Konfigurationskennzeichen (111a, 111b), zum Aktualisieren der Informationen, umfassend die Menge des Waschmittels in dem Waschmittelbehälter (110a, 110b), die in der Speichervorrichtung (520) des Konfigurationskennzeichens (111a, 111b) gespeichert sind.

8. System (100) nach einem der Ansprüche 2 bis 7, umfassend eine Warnung aussendende Vorrichtung (530); und wobei die erhaltenen Informationen eine Menge des Waschmittels in dem Waschmittelbehälter (110a, 110b) umfassen; und wobei die Steuereinheit (120) konfiguriert ist zum Vergleichen der erhaltenen Menge des Waschmittels mit einem Grenzwert; und Erzeugen einer Warnung, die auf der Warnung aussendenden Vorrichtung (530) auszugeben ist, wenn die Menge des Waschmittels in dem Waschmittelbehälter (110a, 110b) unter den Grenzwert fällt, um an einen Austausch des Waschmittelbehälters (110a, 110b) zu erinnern.

9. System (100) nach einem der Ansprüche 1 bis 8, wobei die Steuereinheit (120) konfiguriert ist zum
Erkennen einer erstmaligen Waschmittelentnahme aus dem Waschmittelbehälter (110a, 110b);
Bestimmen eines Zeitpunkts, wann die erstmalige Waschmittelentnahme des Waschmittelbehälters (110a, 110b) erkannt wird; und
Übertragen des bestimmten Zeitpunkts über den Drahtloskommunikator (112a, 112b) an die Speichervorrichtung (520) des Konfigurationskennzeichens (111a, 111b) für eine Speicherung darin.

10. System (100) nach Anspruch 9, wobei die Steuereinheit (120) konfiguriert ist zum
Abrufen des Zeitpunkts der erstmaligen Waschmittelentnahme, der in der Speichervorrichtung (520) des Konfigurationskennzeichens (111a, 111b) gespeichert ist, über den Drahtloskommunikator (112a, 112b);
Prüfen, ob der Zeitunterschied zwischen einem aktuellen Zeitpunkt und dem Zeitpunkt der erstmaligen Waschmittelentnahme eine zuvor bestimmte Zeitgrenze überschreitet; und Durchführen einer Aktion zum Verhindern der Waschmittelentnahme aus dem Waschmittelbehälter (110a, 110b), wenn die zuvor bestimmte Zeitgrenze überschritten ist.

11. System (100) nach einem der Ansprüche 1 bis 10, umfassend
eine Vielzahl von Waschmittelbehältern (110a, 110b);
eine Vielzahl von Dosiervorrichtungen (108a, 108b, 410), wobei jede eine konfiguriert ist, um zu ermöglichen, dass Waschmittel aus einem eindeutigen Waschmittelbehälter (110a, 110b) zu der Reinigungseinheit (130) fließt;
eine Vielzahl von Konfigurationskennzeichen (111a, 111b), wobei jedes eine einem jeweiligen Waschmittelbehälter (110a, 110b) zugeordnet ist, wobei eine jeweilige Speichervorrichtung (520) jedes Konfigurationskennzeichens (111a, 111b) einen jeweiligen Verweis auf das Waschmittel des jeweils zugeordneten Waschmittelbehälters (110a, 110b) umfasst;
eine Vielzahl von Drahtloskommunikatoren (112a, 112b), wobei jeder eine einer spezifischen Dosiervorrichtung (108a, 108b, 410) zugewiesen ist; und wobei die Steuereinheit (120) konfiguriert ist zum:
Auswählen des Waschmittels, das durch die Reinigungseinheit (130) während des Reinigungsvorgangs zu verwenden ist, basierend auf dem erhaltenen Verweis, der aus der Speichervorrichtung (520) des Konfigurationskennzeichens (111a, 111b) des jeweiligen Waschmittelbehälters (110a, 110b) über den jeweiligen Drahtloskommunikator (112a, 112b) erhalten wird.

12. System (100) nach einem der Ansprüche 1 bis 11, umfassend
einen Sensor (26a, 26b), der in dem Teil der zu reinigenden Melkausrüstung (102, 105, 140a, 140b, 140c, 150) liegt, wobei der Sensor (26a, 26b) konfiguriert ist, um während des Reinigungsvorgangs ein Merkmal des Waschmittels zu messen; und wobei die Steuereinheit (120) konfiguriert ist zum
Erhalten einer Messung aus dem Sensor (26a, 26b) bezogen auf das angewendete Waschmittel;
Vergleichen der erhaltenen Messung des Sensors (26a, 26b) mit einem erwarteten Wert des Waschmittelmerkmals; und
Durchführen einer Aktion zum Verhindern der Waschmittelentnahme aus dem Waschmittelbehälter (110a, 110b), wenn die erhaltene Messung nicht dem erwarteten Wert des Waschmittelmerkmals entspricht.

13. System (100) nach einem der Ansprüche 1 bis 12, wobei das Teil der zu reinigenden Melkausrüstung (102, 105, 140a, 140b, 140c, 150) eine Milchleitung (140a, 140b, 140c) umfasst und das System (100) umfasst
ein steuerbares Ventil (10), das konfiguriert ist, um Gas in die Milchleitung (140a, 140b, 140c), umfassend die Mischung, einzuleiten, um einen auf die Milchleitung (140a, 140b, 140c) wirkenden Gaspfropfen herzustellen; und
eine Vakuumpumpe (20), die konfiguriert ist, um einen Unterdruck innerhalb der zu reinigenden Milchleitung (140a, 140b, 140c) zu erzeugen; und wobei
die Steuereinheit (120) konfiguriert ist, um eine Bildung eines Pfropfens der Mischung sicherzustellen, um die Milchleitung (140a, 140b, 140c) zu reinigen durch Sicherstellen, dass während eines Zeitraums Kontakt zwischen dem Pfropfen und einer internen Oberfläche der Milchleitung (140a, 140b, 140c) aufgebaut wird.

14. System (100) nach einem der Ansprüche 1 bis 12, wobei das Teil der zu reinigenden Melkausrüstung (102, 105, 140a, 140b, 140c, 150) eine Milchleitung (140a, 140b, 140c) umfasst und das System (100) umfasst
eine Pumpe (8), die konfiguriert ist, um einen Überdruck zu erzeugen und die Mischung durch die Milchleitung (140a, 140b, 140c) derart zu pumpen, dass ein Querschnitt der Milchleitung (140a, 140b, 140c) mit der Mischung gefüllt wird; und wobei
die Steuereinheit (120) konfiguriert, um die Pumpe (8) zu steuern, um sicherzustellen, dass während eines Zeitraums ein Kontakt zwischen der Mischung und einer internen Oberfläche der Milchleitung (140a, 140b, 140c) aufgebaut wird.

15. System (100) nach einem der Ansprüche 1 bis 12, wobei das Teil der zu reinigenden Melkausrüstung (102, 105, 140a, 140b, 140c, 150) einen Milchtank (150) umfasst.

## Revendications

1. Système (100) configuré pour nettoyer un élément d'équipement de traite (102, 105, 140a, 140b, 140c, 150) dans un environnement agricole, ce système (100) comprend :
un récipient à détergent (110a, 110b) comprenant un détergent ;
une unité de nettoyage (130), configurée pour utiliser du détergent du récipient à détergent (110a, 110b) et de l'eau pour créer un mélange et pour nettoyer l'élément d'équipement de traite (102, 105, 140a, 140b, 140c, 150) pendant une session de nettoyage avec le mélange ;
un dispositif de dosage (108a, 108b, 410) configuré pour alimenter le détergent provenant du récipient à détergent (110a, 110b) à l'unité de nettoyage (130) ;
dans lequel le système (100) est **caractérisé par** :
une étiquette de configuration (111a, 111b), associée au récipient à détergent (110a, 110b), dans lequel un dispositif de mémoire (520) de l'étiquette de configuration (111a, 111b) comprend une référence au détergent du récipient à détergent (110a, 110b) ;
un système de communication sans fil (112a, 112b), configuré pour communiquer sans fil avec l'étiquette de configuration (111a, 111b) et pour récupérer la référence au détergent dans le dispositif de mémoire (520) de l'étiquette de configuration (111a, 111b), lorsque l'étiquette de configuration (111a, 111b) est située dans les limites d'une distance de communication (d) par rapport au système de communication sans fil (112a, 112b) ; et
une unité de commande (120), configurée pour
obtenir la référence au détergent par l'intermédiaire du système de communication sans fil (112a, 112b) auprès du dispositif de mémoire (520) de l'étiquette de configuration (111a, 111b); et
régler au moins un paramètre de l'unité de nettoyage (130) pour la session de nettoyage, en fonction de la référence obtenue ;
dans lequel l'unité de commande (120) est configurée pour ne permettre la mise en œuvre d'un programme de session de nettoyage préprogrammé pour le dispositif de nettoyage (130), que lorsque l'unité de nettoyage (130) est activée alors que du détergent est extrait par l'intermédiaire des dispositifs de dosage (108a, 108b, 410), du récipient à détergent (110a, 110b) au dispositif de nettoyage (130), et qu'aucune étiquette de configuration (111a, 111b) associée au récipient à détergent (110a, 110b) n'est détectée par le système de communication sans fil (112a, 112b).

2. Système (100) selon la revendication 1, dans lequel l'unité de commande (120) est configurée pour obtenir des informations se rapportant à la température à maintenir pendant la session de nettoyage, à la concentration en détergent, au temps de nettoyage de la session de nettoyage, ou à une combinaison de ceux-ci.

3. Système (100) selon la revendication 2, dans lequel le dispositif de mémoire (520) de l'étiquette de configuration (111a, 111b) comprend les informations ; et dans lequel l'unité de commande (120) est configurée pour obtenir les informations par l'intermédiaire du système de communication sans fil (112a, 112b) auprès du dispositif de mémoire (520) de l'étiquette de configuration (111a, 111b).

4. Système (100) selon l'une quelconque des revendications 2 à 3, comprenant
une base de données (125, 165) comprenant les informations associées à la référence au détergent compris dans le récipient à détergent (110a, 110b) ; et dans lequel l'unité de commande (120) est configurée pour
obtenir la référence au détergent auprès de l'étiquette de configuration (111a, 111b) par l'intermédiaire du système de communication sans fil (112a, 112b) ;
fournir la référence obtenue à la base de données (125, 165) ; et
récupérer les informations associées à la référence dans la base de données (125, 165).

5. Système (100) selon la revendication 4, comprenant un dispositif de communication (160) configuré pour communiquer avec la base de données (125, 165) sur un réseau de communication (170) ; et dans lequel l'unité de commande (120) est configurée pour obtenir les informations auprès de la base de données (125, 165) par l'intermédiaire du dispositif de communication (160).

6. Système (100) selon l'une quelconque des revendications 1 à 5, dans lequel le paramètre de l'unité de nettoyage (130) à régler par l'unité de commande (120) pour la session de nettoyage comprend : le temps de nettoyage de la session de nettoyage ;
la température à maintenir par l'unité de nettoyage (130) pendant la session de nettoyage ; la concentration du détergent ; et/ou
le temps de contact surfacique entre le mélange et les surfaces intérieures de l'équipement de traite (102, 105, 140a, 140b, 140c, 150) à nettoyer.

7. Système (100) selon l'une quelconque des revendications 2 à 6, dans lequel les informations obtenues comprennent une quantité de détergent dans le récipient à détergent (110a, 110b) ; et dans lequel l'unité de commande (120) est configurée pour
estimer la quantité de détergent utilisé par l'unité de nettoyage (130) pendant la session de nettoyage ;
calculer une quantité restante de détergent dans le récipient à détergent (110a, 110b) après la session de nettoyage, en soustrayant la quantité utilisée estimée de détergent de la quantité obtenue de détergent ; et
transmettre des informations se rapportant à la quantité restante de détergent par l'intermédiaire du système de communication sans fil (112a, 112b) à l'étiquette de configuration (111a, 111b), pour mettre à jour les informations comprenant la quantité de détergent dans le récipient à détergent (110a, 110b), stockée dans le dispositif de mémoire (520) de l'étiquette de configuration (111a, 111 b).

8. Système (100) selon l'une quelconque des revendications 2 à 7, comprenant un dispositif émetteur d'alerte (530) ; et dans lequel les informations obtenues comprennent une quantité de détergent dans le récipient à détergent (110a, 110b) ; et dans lequel l'unité de commande (120) est configurée pour comparer la quantité obtenue de détergent à une limite seuil ; et générer une alerte à délivrer en sortie sur le dispositif émetteur d'alerte (530) lorsque la quantité de détergent dans le récipient à détergent (110a, 110b) est inférieure à la limite seuil, rappelant le remplacement du récipient à détergent (110a, 110b).

9. Système (100) selon l'une quelconque des revendications 1 à 8, dans lequel l'unité de commande (120) est configurée pour
détecter une toute première extraction de détergent à partir du récipient à détergent (110a, 110b) ;
déterminer un moment dans le temps où la toute première extraction de détergent du récipient à détergent (110a, 110b) est détectée ; et
transmettre le moment dans le temps déterminé par l'intermédiaire du système de communication sans fil (112a, 112b) au dispositif de mémoire (520) de l'étiquette de configuration (111a, 111 b) pour stockage dans celui-ci.

10. Système (100) selon la revendication 9, dans lequel l'unité de commande (120) est configurée pour
récupérer le moment dans le temps de la toute première extraction de détergent, stocké dans le dispositif de mémoire (520) de l'étiquette de configuration (111a, 111b), par l'intermédiaire du système de communication sans fil (112a, 112b) ;
vérifier si la différence de temps entre un moment dans le temps actuel et le moment dans le temps de la toute première extraction de détergent, dépasse une limite de temps prédéterminée ; et effectuer une action permettant d'empêcher une extraction de détergent à partir du récipient à détergent (110a, 110b) lorsque la limite de temps prédéterminée est dépassée.

11. Système (100) selon l'une quelconque des revendications 1 à 10, comprenant
une pluralité de récipients à détergent (110a, 110b) ;
une pluralité de dispositifs de dosage (108a, 108b, 410), configurés chacun pour permettre à du détergent de s'écouler à partir d'un récipient à détergent (110a, 110b) distinct vers l'unité de nettoyage (130) ;
une pluralité d'étiquettes de configuration (111a, 111b), associées chacune à un récipient à détergent (110a, 110b) respectif dans lequel un dispositif de mémoire (520) respectif de chaque étiquette de configuration (111a, 111b) comprend une référence respective au détergent du récipient à détergent (110a, 110b) respectivement associé ;
une pluralité de systèmes de communication sans fil (112a, 112b), dédiés chacun à un dispositif de dosage (108a, 108b, 410) particulier ; et dans lequel l'unité de commande (120) est configurée pour :
sélectionner le détergent à utiliser par l'unité de nettoyage (130) pendant la session de nettoyage, en fonction de la référence obtenue qui a été obtenue auprès du dispositif de mémoire (520) de l'étiquette de configuration (111a, 111b) du récipient à détergent (110a, 110b) respectif, par l'intermédiaire du système de communication sans fil (112a, 112b) respectif.

12. Système (100) selon l'une quelconque des revendications 1 à 11, comprenant
un capteur (26a, 26b), situé dans l'élément d'équipement de traite (102, 105, 140a, 140b, 140c, 150) à nettoyer, ce capteur (26a, 26b) étant configuré pour mesurer une caractéristique du détergent, pendant la session de nettoyage ; et dans lequel l'unité de commande (120) est configurée pour
obtenir une mesure auprès du capteur (26a, 26b), se rapportant au détergent appliqué ;
comparer la mesure obtenue du capteur (26a, 26b) à une valeur attendue de la caractéristique de détergent ; et
effectuer une action permettant d'empêcher une extraction de détergent à partir du récipient à détergent (110a, 110b) lorsque la mesure obtenue ne correspond pas à la valeur attendue de la caractéristique de détergent.

13. Système (100) selon l'une quelconque des revendications 1 à 12, dans lequel l'élément d'équipement de traite (102, 105, 140a, 140b, 140c, 150) à nettoyer comprend une conduite de lait (140a, 140b, 140c) et le système (100) comprend
une vanne commandable (10), configurée pour admettre du gaz dans la conduite de lait (140a, 140b, 140c) comprenant le mélange afin de créer un bouchon agissant sur la conduite de lait (140a, 140b, 140c) ; et
une pompe à vide (20), configurée pour générer une sous-pression au sein de la conduite de lait (140a, 140b, 140c) à nettoyer ; et dans lequel
l'unité de commande (120) est configurée pour déterminer la formation d'un bouchon du mélange, pour nettoyer la conduite de lait (140a, 140b, 140c) en déterminant qu'un contact est établi entre le bouchon et une surface interne de la conduite de lait (140a, 140b, 140c) pendant un laps de temps.

14. Système (100) selon l'une quelconque des revendications 1 à 12, dans lequel l'élément d'équipement de traite (102, 105, 140a, 140b, 140c, 150) à nettoyer comprend une conduite de lait (140a, 140b, 140c) et le système (100) comprend
une pompe (8) configurée pour générer une surpression et pomper le mélange à travers la conduite de lait (140a, 140b, 140c) de telle sorte qu'une section transversale de la conduite de lait (140a, 140b, 140c) est remplie avec le mélange ; et dans lequel
l'unité de commande (120) est configurée pour commander la pompe (8) pour déterminer qu'un contact est établi entre le mélange et une surface interne de la conduite de lait (140a, 140b, 140c) pendant un laps de temps.

15. Système (100) selon l'une quelconque des revendications 1 à 12, dans lequel l'élément d'équipement de traite (102, 105, 140a, 140b, 140c, 150) à nettoyer comprend un réservoir de lait (150).
